(19) Europäisches Patentamt
European Patent Office
Office européen des brevets

(11) EP 2 235 808 B1

(12) **EUROPÄISCHE PATENTSCHRIFT**

(45) Veröffentlichungstag und Bekanntmachung des Hinweises auf die Patenterteilung:
**16.04.2014 Patentblatt 2014/16**

(21) Anmeldenummer: **08870553.8**

(22) Anmeldetag: **11.11.2008**

(51) Int Cl.:
**H02K 1/16** (2006.01) **H02K 29/03** (2006.01)

(86) Internationale Anmeldenummer:
**PCT/EP2008/065267**

(87) Internationale Veröffentlichungsnummer:
**WO 2009/089935 (23.07.2009 Gazette 2009/30)**

(54) **STATOR EINES ELEKTRONISCH KOMMUTIERTEN LÄUFERMOTORS**

STATOR OF AN ELECTRONICALLY COMMUTATED ROTOR MOTOR

STATOR D'UN MOTEUR À ROTOR À COMMUTATION ÉLECTRONIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **15.01.2008 DE 102008004376**
**26.02.2008 DE 102008011230**

(43) Veröffentlichungstag der Anmeldung:
**06.10.2010 Patentblatt 2010/40**

(73) Patentinhaber: **Robert Bosch GmbH**
**70442 Stuttgart (DE)**

(72) Erfinder:
- **KRAUTH, Wolfgang**
  **77855 Achern-Sasbachried (DE)**
- **TIMM, Eike Hermann**
  **76532 Baden-Baden (DE)**

(56) Entgegenhaltungen:
DE-A1- 19 838 335    JP-A- 62 138 051
JP-A- 2001 145 319   US-A- 2 827 582
US-A- 5 986 419      US-A1- 2006 290 225
US-B1- 6 864 612

EP 2 235 808 B1

## Beschreibung

Die Erfindung betrifft einen Stator eines elektronisch kommutierten Läufermotors mit den im Oberbegriff des Anspruchs 1 genannten Merkmalen.

## Stand der Technik

Ein Stator eines elektronisch kommutierten Läufermotors der eingangs genannten Art ist im Allgemeinen in Verbindung mit einem über einen Luftspalt beabstandeten Läufer bekannt. Bei dem elektrischen Läufermotor handelt es sich um eine Gleichstrommaschine, die mit Gleichstrom betrieben wird. Die Gleichstrommaschine weist hierbei einen unbeweglichen Teil, den Stator, und einen drehbar gelagerten Teil, den Läufer, auf. Gleichstrommotoren können sowohl als Innenläufer- oder auch als Außenläufermotoren ausgeführt sein. Bei dem Innenläufermotor befindet sich der Läufer respektive Rotor innerhalb des Stators, wohingegen der Außenläufermotor mit einem den Stator umlaufenden Rotor umgeben ist.

Das Funktionsprinzip des elektronisch kommutierten Läufermotors (EC-Motor) basiert auf dessen mit Permanentmagneten versehenen Läufer und dessen mit einer elektronischen Steuerung zur Kommutierung ausgestatteten Stator. Die elektronische Steuerung ermittelt über einen Sensor, insbesondere Hall-Sensor, die jeweilige Lage des Läufers und schaltet dementsprechend das elektrische Magnetfeld in den Wicklungen des Stators. Der daraus resultierende Effekt wirkt sich durch eine Vermeidung von Schlupfverlusten aus, so dass der Systemwirkungsgrad deutlich erhöht wird. Die Wicklungen des Stators befinden sich dabei in Aufnahmebereichen von kreisförmig und zueinander beabstandeten Magnetpolen, die gegebenenfalls an ihren freien und zu dem Luftspalt hin ausgerichteten Enden mit Polgabelung versehen sind.

Bei elektronisch kommutierten Läufermotoren ist allerdings ein bauartbedingtes und als Rastmoment bezeichnetes Phänomen problematisch. Hierbei variiert durch die Änderung des Luftspalts beim Wechsel von Magnetpol auf Magnetnut des Stators gegenüber den Permanentmagneten des Läufers der magnetische Widerstand und damit die Kraft auf den Läufer. Rastmomente führen zu schwankenden Drehmomenten, zu einem unruhigen Motorenlauf, insbesondere bei kleinen Drehzahlen, sowie dazu, dass der Läufer nach dem Abschalten der Motors nur in bestimmten Stellungen seine Ruhelage einnimmt, sprich rastet. Rastmomente treten insbesondere bei elektrischen Maschinen auf, die Permanentmagnete im Stator und einen genuteten Läufer aus Elektroblechen oder umgekehrt, die einen genuteten Stator und einen Läufer mit Dauermagneten besitzen. Bei Maschinen die sowohl im Stator als auch im Läufer genutet sind, treten im Betrieb ebenfalls Rastmomente auf.

Aus Dokument US 5.986.419 A und US 2.827.582 A ist ein Stator mit Magnetpolen bekannt, wobei die Magnetpole jeweils eine Polgabelung aufweisen. Dabei sind die Magnetpole an der jeweiligen Polgabelung mit zumindest einer Zusatznut zur Bildun einer Zusatzpolgabelung versehen.

## Offenbarung der Erfindung

Der erfindungsgemäße Stator eines elektronisch kommutierten Läufermotors mit den im Anspruch 1 genannten Merkmalen bietet demgegenüber den Vorteil, dass eine auf das jeweilige Rastmoment bezogene Grundordnung eines Elektromotors angehoben, sprich eine vorhandene Rastneigung des Läufers bezogen auf den Stator reduziert werden kann. Eine zur Reduzierung des Rastmomentes vorzusehende Schrägung der Nutschlitze oder der Magnetkanten, welche allerdings Flussverluste verursacht, kann somit verringert werden. Die Schrägung beziehungsweise ein vorgesehener Schrägungswinkel kann beispielsweise bei einer Verdoppelung der Rastmomentgrundordnung halbiert und damit signifikant reduziert werden. Letztlich sinkt durch den reduzierten Schrägungswinkel der dadurch erzeugte Flussverlust, wobei ein durch die Zusatznuten bedingter, jedoch vergleichsweise geringer, Flussverlust toleriert wird. Idealerweise finden die vorgestellten Zusatznuten bei solchen elektrischen Maschinen Anwendung, bei denen ein Flussgewinn durch die reduzierte Schrägung deutlich größer ist als der Flussverlust durch die Luftspaltergänzungen. Der Flussgewinn ist insofern nutzbar, als dass die Größe eines Elektromotors reduziert oder der entsprechende Betriebsstrom gesenkt werden kann.

Gemäß der Erfindung ist es vorgesehen, dass die Breite der jeweiligen Zusatznut entsprechend der Breite der Nuten dimensioniert ist, so dass sich eine Fertigungssynergie durch einen Einsatz von gleichen Werkzeugen zur Einbringung der Nuten und der Zusatznuten erzielen lässt.

Gemäß der Erfindung ist es vorgesehen, dass die Tiefe der jeweiligen Zusatznut der Bedingung

$$\geq \sqrt{3} \, * \, \text{Luftspalt}$$

entspricht, wobei der Luftspalt durch einen Abstand zwischen den Polgabelungen beziehungsweise den Zusatzpolgabelungen und einem zu den Magnetpolen beabstandet anordenbaren Läufer definiert ist. Diese Dimensionierung der Zusatznuten trägt ergänzend zu der rastmomentwirksamen Funktionsweise der beschriebenen Lösung bei. Bei der vorgenannten Bedingung handelt es sich um die Angabe einer Werteskala, deren Einzelwerte sich zur Dimensionierung der Zusatznuttiefe als besonders effektiv erwiesen haben. In einer vorteilhaften Ausgestaltung der Erfindung ist es vorgesehen, dass je Polgabelung eine als Wicklungsraum ausgeführte Gabelungsnut vorgesehen ist. Mittels der jeweiligen Gabe-

EP 2 235 808 B1

lungsnut je Magnetpol kann ein relativ hoher Leiterquerschnitt der Wicklungsstränge je Nutvolumen erzielt werden. Ein daraus resultierender erhöhter Nutfüllfaktor führt letztlich zu einer verbesserten Leistungsdichte sowie zu einem verbesserten Wirkungsgrad des Läufermotors.

In einer weiteren vorteilhaften Ausgestaltung der Erfindung ist es vorgesehen, dass jede der Polgabelungen mit zwei Zusatznuten derart versehen sind, dass eine doppelte Zusatzpolgabelung gegeben ist. Dadurch kann die Rastmomentordnung des Elektromotors noch weiter, im Sinne einer verringerten Rastneigung, angehoben und damit optimiert werden. Die Schrägung beziehungsweise ein entsprechender Schrägungswinkel der Nutschlitze und/oder der Magnetkanten ist demzufolge reduzierbar, wodurch sich die Flussverluste noch weiter vermindern lassen.

In einer weiteren bevorzugten Ausgestaltung der Erfindung ist es vorgesehen, dass die Breite der jeweiligen Zusatznut entsprechend der Breite der Nuten mit einer Toleranz von ± 15% dimensioniert ist. Bei dem hiernach angegebenen Toleranzband kann eine rastmomentwirksame Funktionsweise bei einem ausgewogenen Rundlauf des Elektromotors erzielt werden.

Gemäß einer weiteren vorteilhaften Ausgestaltung der Erfindung ist es vorgesehen, dass zwölf Magnetpole sowie vierundzwanzig mit den Wicklungssträngen befüllte Nuten vorgesehen sind. Dabei handelt es sich um eine bevorzugte Bauform und eine zugehörige Konfiguration derselben, bei welcher Drehmoment, Drehzahl und Rundlauf in einem ausgewogenen Verhältnis stehen. Ferner ist es vorteilhaft, dass zwei Magnetpole sowie vier mit den Wicklungssträngen befüllte Nuten im Sinne einer Elementarmaschine vorgesehen sind. Hierbei wird jede kleinste, Teilbarkeitsbedingungen erfüllende und funktionsfähige Anordnung als Elementarmaschine bezeichnet.

Mit Vorteil findet der Stator Einsatz bei einem elektronisch kommutierten Läufermotor, bei welchem den Stator umgebende Magnete, insbesondere Permanentmagnete, eines Läufers vorgesehen sind. Als besonders vorteilhaft lässt sich bei dieser Motorenkategorie der so genannte Außenläufermotor hervorheben, da dabei das so genannte Rotations-Trägheitsmoment des Läufers, beispielsweise bei einer Lüfteranwendung, nutzbar gemacht werden kann. Mit elektronisch kommutierten und damit bürstenlosen Elektromotoren, eröffnen sich neue Möglichkeiten für die anspruchsvolle Einbindung in Fahrzeug-Bordnetze und Fahrzeug-Bussysteme. Derartige Elektromotoren lassen sich mit Hilfe integrierter Elektronik am Gleichstromnetz betreiben, sind mit geringem Aufwand regelbar und zeichnet sich durch einen verschleißfreien Betrieb aus.

**Kurze Beschreibung der Zeichnung**

Die Erfindung sowie vorteilhafte Ausgestaltungen gemäß den Merkmalen der weiteren Ansprüche werden im Folgenden anhand des in der Zeichnung dargestellten Ausführungsbeispiels näher erläutert, ohne dass insoweit eine Beschränkung der Erfindung erfolgt; diese umfasst vielmehr alle Abwandlungen, Änderungen und Äquivalente, die im Rahmen der Ansprüche möglich sind. Es zeigt die einzige Figur einen erfindungsgemäßen Stator in einer Schnittdarstellung.

**Ausführungsform(en) der Erfindung**

In der Figur ist ein Stator 10 und ein Läufer 11 eines elektronisch kommutierten Läufermotors 12 in einer einem Blechschnitt entsprechenden Schnittdarstellung gezeigt. Der Stator 10 ist mit einer Anzahl Magnetpole 13 versehen, die durch Nuten 14, insbesondere Wickelräume, voneinander getrennt sind. Die Magnetpole 13 - auch als Statorzähne bezeichnet - weisen jeweils eine Polgabelung 15 in der Art einer Verzweigung auf, welche mit einer Gabelungsnut 16 versehen sind. Die Magnetpole 13 sind mit zumindest zwei Wicklungssträngen 17 umwickelt, welche gegebenenfalls auch die Polgabelungen 15 umgeben. Wesentlich ist hierbei, dass die Magnetpole 13 an der jeweiligen Polgabelung 15 mit zumindest einer Zusatznut 18 zur Bildung einer Zusatzpolgabelung 19 versehen sind. Dadurch wird ein zwischen der äußeren Umfangsfläche des Stators 10 und der inneren Umfangsfläche des Läufers 11 vorhandener Luftspalt 20 partiell erweitert, wodurch ein mit der Wirkung der Nuten 14 beziehungsweise Gabelungsnuten 16 korrespondierender Effekt, nämlich eine Erhöhung der Rastmomentordnung, erzielt wird. Die Tiefe der jeweiligen Zusatznut 18 entspricht dabei bevorzugt der Bedingung

$$\geq \sqrt{3} * \text{Luftspalt.}$$

Die innere Umfangsfläche des Läufers 11 ist mit Magneten 21, insbesondere Dauermagneten, derart bestückt, dass wechselweise Magnete 21 mit ihrer N-Polung und Magnete mit ihrer S-Polung zu dem Stator 10 hin ausgerichtet sind. Letztlich können durch diese technische Maßnahme bislang an Nutschlitzen oder Magnetkanten respektive an Lamellenpaketen vorzunehmende Schrägungen vermieden werden. Die Schrägung ist mit magnetischen Flussverlusten verbunden und wird mit Hilfe eines Schrägungsfaktors bestimmt. Der Schrägungsfaktor wird durch einen Multiplikator repräsentiert, der den Flussverlust bezeichnet. Dabei entspricht ein Schrägungsfaktor von 1 einem magnetischen Fluss von 100%, also einer flussverlustfreien Konfiguration. Bei dem gemäß der Figur dargestellten Ausführungsbeispiel ist gegenüber einer herkömmlichen Ausführung, beispielsweise mit einem typischen Schrägungsfaktor, der 0,9 entspricht, ein Flussgewinn von 7,4% realisierbar. Der Schrägungsfaktor des erfindungsgemäßen Ausführungsbeispiels gemäß der gezeigten Figur beträgt demnach 0,974. Sofern nach einer Überprüfung der Luftspaltaufweitungen mittels einer Finite-Elemente-Methode (FEM) ein nennenswerter Flussgewinn verbleibt, ist die Maßnahme gemäß der in der Figur dargestellten Motorausführung sinnvoll einsetzbar.

Die Finite-Elemente-Methode ist ein numerisches Verfahren zur näherungsweisen Lösung, insbesondere elliptischer partieller Differentialgleichungen mit Randbedingungen. Mit der Finite-Elemente-Methode können Berechnungen durchgeführt werden, in dem das Berechnungsgebiet in eine große Zahl kleiner Elemente unterteilt wird. Die Elemente sind endlich klein, wobei die Anzahl der Elemente ebenfalls endlich ist. Das Aufteilen des Berechnungsgebiets in eine endliche, also finite, Anzahl Elemente endlicher, also finiter, Größe ist der Kern der Finite-Elemente-Methode. Innerhalb dieser Elemente werden Ansatzfunktionen definiert, aus denen sich über die partielle Differentialgleichung und gegebenen Rand- und Übergangs-Bedingungen ein großes Gleichungssystem ergibt. Aus dem gelösten Gleichungssystem werden danach die gesuchten Resultate abgeleitet.

Bei dem Läufermotor 12 handelt es sich um einen elektronisch kommutierten Antrieb in Form eines Außenläufermotors. Der elektronisch kommutierte Läufermotor 12 (EC-Motor) ist ein kollektor- und bürstenloser sowie mittels Permanentmagneten erregter Gleichstrommotor in Außenläuferbauweise mit hoher Polzahl. Ein mit einer Leistungselektronik versehenes Steuergerät (EC-Controller) kommutiert einen auf den Motor 12 aufgeschalteten Strom in den Motorwicklungen elektronisch und damit verschleißfrei. Darüber hinaus überwacht das Steuergerät den Motor 12 und stellt Schnittstellen für eine einfache Steuerung des Antriebs zur Verfügung. Die zumindest zwei, insbesondere drei, Spulenstränge 17 des Stators 10 werden über eine Brückenschaltung, beispielsweise mit Bipolartransistoren, MOSFET oder IGBT, oder bei kleinen Leistungen in einem Leistungs-IC integriert, kommutiert. Verwendet wird ein derartiger Motor beispielsweise bei einem Motorkühlgebläse, insbesondere elektronisch kommutiertes Motorkühlgebläse.

Mit bürstenlosen und damit elektronisch kommutierten Elektromotoren eröffnen sich neue Möglichkeiten für die anspruchsvolle Einbindung in Kraftfahrzeug-Bordnetze und Kraftfahrzeug-Bussysteme. Sie lassen sich dank integrierter Elektronik am Gleichstromnetz betreiben, sind leicht zu regeln und weitestgehend verschleißfrei. Die EC-Motoren können mit der entsprechenden Leistungselektronik über einen Strom- und einen Steueranschluss, zum Beispiel über einen in der Automobiltechnik üblichen Datenbus angesteuert werden. Zudem können die Motoren durch ausgesuchte Magnetmaterialien in der Leistungsdichte und im Bauvolumen so optimiert werden, dass herkömmliche Antriebskonfigurationen bei weitem übertroffen werden. Bei Außenläufermotoren sitzt der rotierende Läufer außen über der Feldwicklung, wodurch Raum für die Permanentmagnete gegeben ist. Neben einem hohen Drehmoment bei ausgewogenem Gleichlauf zeichnet sich dieser Motorentyp dadurch aus, dass auf Grund des frei zugänglichen Läufers eine ideale Basis gegeben ist, um beispielsweise Lüfterschaufeln oder Pumpenräder zu tragen.

Zusammenfassend ist ein Stator 10 eines elektronisch kommutierten Läufermotors 12 gegeben, der mit einer Anzahl durch Nuten 14 getrennte und jeweils eine Polgabelung 15 aufweisende Magnetpole 13 sowie mit zumindest zwei daran angeordneten Wicklungssträngen 17 versehen ist. Dadurch, dass die Magnetpole 13 an der jeweiligen Polgabelung 15 mit zumindest einer Zusatznut 18 zur Bildung einer Zusatzpolgabelung 19 versehen sind, können einerseits die auf das Rastmoment bezogene Grundordnung des Elektromotors 12 angehoben und bislang vorzusehende Schrägungen reduziert werden. Mit anderen Worten ist gemäß der Figur ein vierundzwanzig Nuten 14;16 aufweisenden Stator 10 gegeben, der in dem jeweiligen Nutgrund in zwölf Magnetpole 13 beziehungsweise Zähne zusammengefasst ist. In dem Luftspalt 20 sind alle vierundzwanzig Zahnköpfe 15;19 quasi gleichberechtigt. Der in dem Luftspalt 20 vierundzwanzig-nutige Stator 10 ist demzufolge durch die Zusatznuten 18 auf ein Niveau mit achtundvierzig Nuten 14;16;18 hochgesetzt.

**Patentansprüche**

1. Stator (10) eines elektronisch kommutierten Läufermotors (12), der mit einer Anzahl durch Nuten (14) getrennte und jeweils eine Polgabelung (15) aufweisende Magnetpole (13) sowie mit zumindest zwei daran angeordneten Wicklungssträngen (17) versehen ist, wobei die Magnetpole (13) an der jeweiligen Polgabelung (15) mit zumindest einer Zusatznut (18) zur Bildung einer Zusatzpolgabelung (19) versehen sind, **dadurch gekennzeichnet, dass** die Breite der jeweiligen Zusatznut (18) entsprechend der Breite der Nuten dimensioniert ist und dass die Tiefe der jeweiligen Zusatznut (18) der Bedingung $\geq \sqrt{3}$ * Luftspalt entspricht, wobei der Luftspalt (20) durch einen Abstand zwischen den Polgabelungen (15) beziehungsweise den Zusatzpolgabelungen (19) und einem zu den Magnetpolen (13) beabstandet anordenbaren Läufer (11) definiert ist.

2. Stator (10) nach Anspruch 1, **dadurch gekennzeichnet, dass** je Polgabelung (15) eine als Wicklungsraum ausgeführte Gabelungsnut (16) vorgesehen ist.

3. Stator (10) nach einem der vorhergehenden Ansprüche, **dadurch gekennzeichnet, dass** jede der Polgabelungen (15) mit zwei Zusatznuten (18) derart versehen sind, dass eine doppelte Zusatzpolgabelung (19) gegeben ist.

**4.** Stator (10) nach einem der vorhergehenden Ansprüche, **dadurch gekennzeichnet, dass** die Breite der jeweiligen Zusatznut (18) entsprechend der Breite der Nuten (14) mit einer Toleranz von ± 15% dimensioniert ist.

**5.** Stator (10) nach einem der vorhergehenden Ansprüche, **dadurch gekennzeichnet, dass** zwölf Magnetpole (13) sowie vierundzwanzig mit den Wicklungssträngen (17) befüllte Nuten (14;16) vorgesehen sind.

**6.** Stator (10) nach einem der vorhergehenden Ansprüche, **dadurch gekennzeichnet, dass** zwei Magnetpole (13) sowie vier mit den Wicklungssträngen (17) befüllte Nuten (14;16) im Sinne einer Elementarmaschine vorgesehen sind.

**7.** Elektronisch kommutierter Läufermotor (12), **gekennzeichnet durch** einen Stator (10) nach einem der vorhergehenden Ansprüche.

**8.** Elektronisch kommutierter Läufermotor (12) nach Anspruch 7, **gekennzeichnet durch** einen mit Magneten (21), insbesondere Permanentmagneten, versehenen und den Stator (10) umgebenden Läufer (11).

**9.** Elektronisch kommutierter Läufermotor (12) nach einem der Ansprüche 7 oder 8, **gekennzeichnet durch** seine Ausführung als Außenläufermotor.

**Claims**

**1.** Stator (10) of an electronically commutated rotor motor (12), which is provided with a number of magnet poles (13) separated by slots (14) and each having a pole fork (15) and with at least two winding phases (17) arranged on said magnet poles, wherein the magnet poles (13) are provided on the respective pole fork (15) with at least one additional slot (18) for forming an additional pole fork (19), **characterized in that** the width of the respective additional slot (18) is dimensioned so as to correspond to the width of the slots, and **in that** the depth of the respective additional slot (18) corresponds to the condition $\geq \sqrt{3}$ * air gap, wherein the air gap (20) is defined by a distance between the pole forks (15) or the additional pole forks (19) and a rotor (11) that can be arranged spaced apart from the magnet poles (13).

**2.** Stator (10) according to Claim 1, **characterized in that** one fork slot (16) embodied as winding space is provided per pole fork (15).

**3.** Stator (10) according to one of the preceding claims, **characterized in that** each of the pole forks (15) is provided with two additional slots (18) in such a way that a double additional pole fork (19) is provided.

**4.** Stator (10) according to one of the preceding claims, **characterized in that** the width of the respective additional slot (8) is dimensioned so as to correspond to the width of the slots (14) with a tolerance of ± 15%.

**5.** Stator (10) according to one of the preceding claims, **characterized in that** twelve magnet poles (13) and twenty four slots (14; 16) filled with the winding phases (17) are provided.

**6.** Stator (10) according to one of the preceding claims, **characterized in that** two magnet poles (13) and four slots (14; 16) filled with the winding phases (17) are provided for an elementary machine.

**7.** Electronically commutated rotor motor (12), **characterized by** a stator (10) according to one of the preceding claims.

**8.** Electronically commutated rotor motor (12) according to Claim 7, **characterized by** a rotor (11) provided with magnets (21), in particular permanent magnets, and surrounding the stator (10).

**9.** Electronically commutated rotor motor (12) according to either of Claims 7 and 8, **characterized by** its embodiment as an external-rotor motor.

**Revendications**

**1.** Stator (10) d'un moteur à rotor (12) à commutation électronique, qui est pourvu d'une pluralité de pôles magnétiques (13) séparés par des encoches (14) et présentant chacun une bifurcation polaire (15) et qui est également pourvu d'au moins deux faisceaux de bobinage (17) disposés sur ceux-ci, les pôles magnétiques (13) étant pourvus sur la bifurcation polaire respective (15) d'au moins une encoche supplémentaire (18) pour former une bifurcation polaire supplémentaire (19), **caractérisé en ce que** la largeur de l'encoche supplémentaire respective (18) est dimensionnée de manière correspondant à la largeur des encoches et **en ce que** la profondeur de l'encoche supplémentaire respective (18) correspond à la condition d'être $\geq \sqrt{3}$ * l'entrefer, l'entrefer (20) étant défini par une distance entre les bifurcations polaires (15), respectivement les bifurcations polaires supplémentaires (19), et un rotor (11) pouvant être disposé à distance des pôles magnétiques (13).

**2.** Stator (10) selon la revendication 1, **caractérisé en ce que** pour chaque bifurcation polaire (15) est prévue une encoche de bifurcation (16) réalisée en tant qu'espace de bobinage.

**3.** Stator (10) selon l'une quelconque des revendications précédentes, **caractérisé en ce que** chacune des bifurcations polaires (15) est pourvue de deux encoches supplémentaires (18) de telle sorte que l'on obtienne une bifurcation polaire supplémentaire double (19).

**4.** Stator (10) selon l'une quelconque des revendications précédentes, **caractérisé en ce que** la largeur de l'encoche supplémentaire respective (18) est dimensionnée de manière à correspondre à la largeur des encoches (14) avec une tolérance de $\pm$ 15 %.

**5.** Stator (10) selon l'une quelconque des revendications précédentes, **caractérisé en ce que** douze pôles magnétiques (13) ainsi que vingt-quatre encoches (14 ; 16) remplies avec les faisceaux de bobinage (17) sont prévus.

**6.** Stator (10) selon l'une quelconque des revendications précédentes, **caractérisé en ce que** deux pôles magnétiques (13) ainsi que quatre encoches (14 ; 16) remplies avec les faisceaux de bobinage (17) au sens d'une machine élémentaire sont prévus.

**7.** Moteur à rotor (12) à commutation électronique, **caractérisé par** un stator (10) selon l'une quelconque des revendications précédentes.

**8.** Moteur à rotor (12) à commutation électronique selon la revendication 7, **caractérisé par** un rotor (11) pourvu d'aimants (21), en particulier d'aimants permanents, et entourant le stator (10).

**9.** Moteur à rotor (12) à commutation électronique selon l'une quelconque des revendications 7 ou 8, **caractérisé par** sa réalisation sous forme de moteur à rotor extérieur.

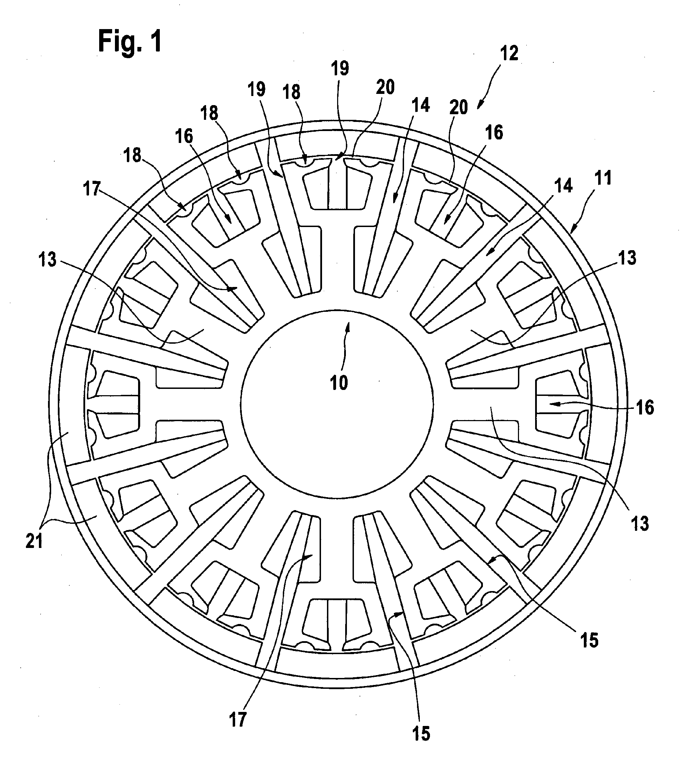

**Fig. 1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5986419 A
- US 2827582 A